# EUROPÄISCHE PATENTSCHRIFT

(11) **EP 3 127 584 B1**
(45) Veröffentlichungstag und Bekanntmachung des Hinweises auf die Patenterteilung: **27.01.2021**
(21) Anmeldenummer: 15179842.8
(22) Anmeldetag: 05.08.2015
(51) Int. Cl.: A62B 33/00, A63B 29/02, B60R 21/235

(54) **AIRBAG FÜR EIN LAWINENAIRBAGSYSTEM, LAWINENAIRBAGSYSTEM UND VERFAHREN ZUM FERTIGEN EINES AIRBAGS**
AIR BAG FOR AN AVALANCHE AIR BAG SYSTEM, AVALANCHE AIR BAG SYSTEM AND METHOD FOR PRODUCING AN AIRBAG
COUSSIN GONFLABLE POUR UN SYSTEME DE COUSSIN GONFLABLE EN CAS D'AVALANCHE, SYSTEME DE COUSSIN GONFLABLE EN CAS D'AVALANCHE ET PROCEDE DE FABRICATION D'UN COUSSIN GONFLABLE

(43) Veröffentlichungstag der Anmeldung: 08.02.2017
(73) Patentinhaber: Ortovox Sportartikel GmbH, 82024 Taufkirchen (DE)
(72) Erfinder: Bier, Christian, 52024 Taufkirchen (DE)
(74) Vertreter: Hofstetter, Schurack & Partner

(56) Entgegenhaltungen:
- EP-A1- 1 967 422
- EP-A1- 2 311 692
- DE-A1-102005 055 135

## Beschreibung

Die Erfindung betrifft einen Airbag für ein Lawinenairbagsystem. Der Airbag umfasst eine erste textile Lage, welche auf zumindest einer Seite mit einem Polymer beschichtet ist. Des Weiteren betrifft die Erfindung ein Lawinenairbagsystem mit wenigstens einem solchen Airbag und ein Verfahren zum Fertigen eines solchen Airbags.

Lawinenairbagsysteme dienen dem Schutz von Personen insbesondere im Fall einer Verschüttung durch eine Lawine oder bei einem Sturz. Solche Airbagsysteme haben als wesentlichen Bestandteil einen Airbag oder Luftsack, welcher im Bedarfsfall schnell aufgeblasen wird, um zusätzlichen Auftrieb zu erzeugen. Der aufgeblasene Airbag vergrößert das Volumen der von der Lawine erfassten Person, welche beispielsweise einen Rucksack mit dem Lawinenairbagsystem trägt. Dadurch wird die Wahrscheinlichkeit verringert, dass die Person von den Schneemassen begraben wird. An den Airbag für das Lawinenairbagsystem wird daher die Anforderung gestellt, dass der Airbag für eine gewisse Zeit und bei erhöhtem Druck gasdicht ist und nicht sofort nach dem Aufblasen in sich zusammenfällt.

Des Weiteren ist der Airbag so auszulegen, dass er hohen mechanischen Belastungen standhält, welche von außen auf den Airbag einwirken können. Denn bei einem Lawinenabgang kann auch ein Kontakt des Airbags mit Felsen, Bäumen und dergleichen vorkommen, sodass es kurzfristig zu sehr hohen Belastungen für den Airbag kommen kann. Hält der Airbag einem Innendruck von 0,3 bar für mindestens drei Minuten stand und erfüllt das Material des Airbags selbst gewisse Anforderungen an die Zugfestigkeit oder Reißfestigkeit, so ist davon auszugehen, dass der Airbag Situationen eines Lawinenabgangs übersteht, ohne zu reißen.

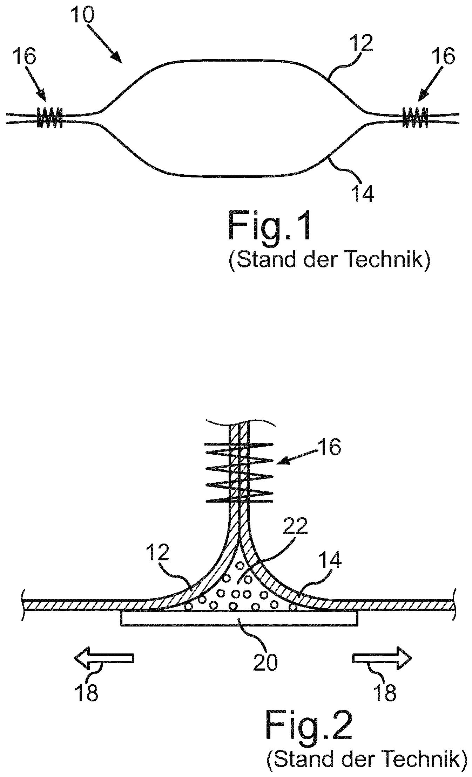

Derzeit im Handel erhältliche Lawinenairbags sind üblicherweise so aufgebaut, wie dies schematisch und stark vereinfacht in Fig. 1 und Fig. 2 veranschaulicht ist. Bei der Herstellung von solchen Airbags 10 gemäß dem Stand der Technik werden eine erste textile Lage 12 und eine zweite textile Lage 14 miteinander durch Nähen verbunden. Die beiden textilen Lagen 12, 14 sind durch Aufbringen einer Polymerschicht im Wesentlichen gasdicht gemacht. Mit dieser polymerbeschichteten Seite werden die beiden textilen Lagen 12, 14 aufeinandergelegt und dann am äußeren Rand mit einer Naht 16 umnäht, sodass ein Sack entsteht. Obwohl die textilen Lagen 12, 14 selbst aufgrund der Polymerbeschichtung weitgehend gasdicht sind, ist der so gebildete Sack zunächst undicht. Denn an den Nahtlöchern kann das Gas entlang dem zum Ausbilden der Naht 16 verwendeten Nähgarn entweichen.

Die für den Zusammenhalt der beiden textilen Lagen 12, 14 sorgende Naht 16 ist eine Schälnaht, welche auch doppelt ausgeführt sein kann. Fig. 2 zeigt eine vergrößerte Detailansicht der Naht 16. Im Betrieb des aufgeblasenen Airbags 10 treten an den Nähten 16 hohe Schälbelastungen entlang einer den Nähten 16 folgenden Linie auf. Die entsprechenden Zugkräfte sind in Fig. 2 durch Kraftpfeile 18 veranschaulicht. Die Krafteinwirkung auf die Naht 16 erfolgt also entlang einer Linie, welche dem Verlauf der jeweiligen Naht 16 folgt. Das Vorsehen derartiger Schälnähte ist aufgrund der hohen auf die Naht 16 wirkenden Belastung ungünstig. Das Vorsehen einer Doppelnaht löst das Problem nicht, da eine weitere Naht die Schälfestigkeit der inneren Naht nicht wesentlich erhöht, so dass im Belastungsfall die Nähte einfach zeitlich nacheinander versagen.

Des Weiteren muss dem Problem der Luftdurchlässigkeit des Airbags 10 im Bereich der Nähte 16 durch eine nachträgliche Abdichtung oder Versiegelung aller Nähte 16 begegnet werden. Zum Abdichten wird beispielsweise das sogenannte Tape-Verfahren angewendet, bei welchem ein Band bei erhöhter Temperatur und Druck aufgebügelt wird. Ein entsprechendes Tape oder Siegelband 20 ist auf die jeweilige Polymerbeschichtung der textilen Lagen 12, 14 abgestimmt. Wird beispielsweise die jeweilige textile Lage 12, 14 mit einem Polyurethan beschichtet, so wird ein mit Polyurethan kompatibles Siegelband 20 verwendet, damit eine gute Verbindung mit dieser Beschichtung zustande kommt. Da diese Naht 16 im fertigen Airbag 10 innen liegt, muss das gesamte Airbagmaterial zunächst mit der Innenseite nach außen positioniert werden und in dieser Position vernäht und abgedichtet werden. Im nächsten Schritt muss das Airbagmaterial wieder auf die richtige Seite gewendet werden. Um ein solches Wenden von rechts auf links zu ermöglichen, ist an einer Stelle die Naht 16 so weit unterbrochen, dass eine Öffnung zwischen den beiden textilen Lagen 12, 14 bestehen bleibt. Diese Öffnung muss groß genug sein, dass das gesamte Material des Airbags 10 durch die Öffnung hindurch gezogen werden kann. Nach dem Anbringen des Siegelbands 20 muss der Airbag 10 dann wieder zurück gewendet werden. Anschließend wird die Öffnung separat vernäht und mit einem weiteren Siegelband abgedichtet.

Zusätzlich oder alternativ zum Vorsehen des Siegelbands 20 kann eine Gasdichtheit der Nähte 16 durch Einbringen von einem Silikonmaterial wie etwa von Silikonkautschuk 22 in an die jeweilige Naht 16 angrenzende Bereiche erreicht werden, welche der Schälbelastung oder Zugbelastung ausgesetzt sind.

Das Abdichten von Schälnähten mit Silikonkautschuk 22 kommt beispielsweise bei Fahrzeugairbags zum Einsatz. Um hier die Belastung der Naht 16 durch den explosionsartig erzeugten Innendruck abzufedern, wird innerhalb des Airbags 10 entlang der herzustellenden Naht 16 eine Schicht des Silikonkautschuks 22 aufgebracht, welche eine definierte Dicke und Breite aufweist. Prinzipiell ist es möglich, eine solche Technologie auch für Herstellung von Lawinenairbags zu verwenden, um die Naht 16 einerseits abzudichten und andererseits die punktuelle Schälbelastung der Naht 16 auf einen größeren Bereich zu verteilen. Bei der Verwendung des Silikonkautschuks 22 zum Abdichten der Naht 16 braucht der Airbag 10 nicht von links auf rechts gewendet zu werden. Es kann also die Naht 16 in einem Arbeitsgang hergestellt und zugleich das Abdichten der Naht 16 sichergestellt werden.

Jedoch entstehen durch den Einsatz der Silikontechnologie hohe Kosten, und das Aufbringen des Silikonmaterials ist besonders aufwendig. Auch hier handelt es sich also wie beim Tape-Verfahren um ein aufwendiges Fertigungsverfahren mit vielen Arbeitsschritten.

Verfahren zum Abdichten, bei welchen das Siegelband 20 zum Einsatz kommt, bergen zudem ein hohes Fehlerrisiko. Denn es muss sichergestellt werden, dass das Siegelband 20 entlang der gesamten Naht 16 für die erwünschte Dichtigkeit sorgt. Zudem ist eine hohe Anzahl verschiedener Arbeitsschritte erforderlich, da der Airbag 10 zunächst so vernäht und abgedichtet werden muss, dass die Innenseite außen liegt. Anschließend ist der Airbag 10 wieder von innen nach außen zu wenden.

Des Weiteren entsteht bei beiden Verfahren immer eine Schälnaht, welche im Hinblick auf das Auftreten von hohen Kraftspitzen ungünstig ist. Insbesondere kann sich nämlich an einer solchen Schälnaht ein Anriss oder eine Fehlstelle sehr rasch vergrößern und so zum kompletten Versagen beziehungsweise Reißen des Airbags 10 an der Naht 16 führen.

Zudem tragen beim Falten von Stoffen mit einer genähten Naht die Nahtstellen besonders auf. Dies führt zu einem großen Packvolumen des Airbags, welches insbesondere bei einem Lawinenairbagsystem unerwünscht ist. Des Weiteren erhöhen die Verwendung des Siegelbands 20 und insbesondere des Silikonkautschuks 22 das Gewicht des Airbags 10. Auch dies ist für den Einsatz des Airbags 10 in einem Lawinenairbagsystem nachteilig.

Die EP 1 967 422 A1 beschreibt einen Airbag, bei welchem zwei als Wandungsteile ausgebildete Verbundschichtmaterialien entweder direkt oder über einen Zwischenabschnitt miteinander verbunden sind.

Die EP 2 311 692 A1 beschreibt einen als Sicherheitseinrichtung in einem Kraftfahrzeug vorgesehenen Airbag mit zwei Lagen, welche an Randseiten mittels eines Ultraschallschweißwerkzeugs in einem Bereich miteinander verschweißt sind.

Die DE 10 2006 051 935 A1 beschreibt eine Gassackeinrichtung, welche eine tubusförmige Verteileinrichtung für das Gas umfasst. Die Verteileinrichtung ist hierbei aus einem Zuschnitt gebildet, dessen Endbereiche radial hintereinander und überlappend angeordnet sind. Die Überlappnaht ist in Längserstreckungsrichtung der Verteileinrichtung ausgeführt, wobei eine Fadennaht oder eine Schweißnaht oder eine Kombination dieser Nähte zum Einsatz kommen kann. Des Weiteren können zwischen weiteren Zuschnitten und der Verteileinrichtung geschweißte Überlappnähte vorgesehen sein.

Die US 2002/0056979 A1 und die US 6 355 123 B1 beschreiben einen Überroll-Airbag für ein Fahrzeug, bei welchem eine obere Stofflage und eine untere Stofflage auf einander zugewandten Seiten mit einem thermoplastischen, gegenüber Hochfrequenzenergie reaktiven Urethan beschichtet sind. Die beiden Stofflagen sind durch Hochfrequenzschweißen, Ultraschallschweißen oder thermisches Schweißen miteinander verbunden und bilden hierbei eine Schälnaht aus. Zum Verstärken der Schälnaht ist ein zusätzliches Stück Stoff vorgesehen, welches mit der oberen Stofflage einerseits und mit der unteren Stofflage andererseits an einer jeweiligen Überlappnaht durch Hochfrequenzschweißen verbunden ist.

Die DE 10 2007 051 486 A1 beschreibt ein Verfahren zur Herstellung eines Airbags, bei welchem zwei Stücke Airbagstoff mittels eines Kurzwellenverfahrens entlang des Umfangs auf einer Linie durch Verschmelzen miteinander verbunden werden. Im Bereich der Linie bilden die beiden Stücke des Airbagstoffs eine Überlappungszone aus. Der jeweilige Airbagstoff ist ein Verbundmaterial, welches eine elastische Folie aus einem thermoplastischen Polyurethan, eine unelastische Folie aus einem Polyamid und eine dazwischen angeordnete Bindeschicht umfasst.

Des Weiteren beschreiben die WO 2008/006359 A2 und die WO 2008/006360 A2 eine Tasche oder einen Rucksack, bei welcher beziehungsweise bei welchem beschichtete Materialen mittels Überlappschweißung miteinander verbunden sind. Die Überlappnähte können mit einem Band verstärkt sein und mit Hitze oder Ultraschall versiegelte Ränder aufweisen.

Aufgabe der vorliegenden Erfindung ist es, einen Airbag der eingangs genannten Art, ein Lawinenairbagsystem mit einem solchen Airbag und ein Verfahren zum Fertigen eines solchen Airbags zu schaffen, bei welchem die mit dem Vorhandensein von Schälnähten einhergehenden Nachteile zumindest weitgehend vermieden sind.

Diese Aufgabe wird durch einen Airbag mit den Merkmalen des Patentanspruchs 1, durch ein Lawinenairbagsystem mit den Merkmalen des Patentanspruchs 12 und durch ein Verfahren mit den Merkmalen des Patentanspruchs 13 gelöst. Vorteilhafte Ausgestaltungen mit zweckmäßigen Weiterbildungen der Erfindung sind in den abhängigen Patentansprüchen angegeben.

Der erfindungsgemäße Airbag für ein Lawinenairbagsystem umfasst eine erste textile Lage, welche auf zumindest einer Seite mit einem Polymer beschichtet ist. Des Weiteren umfasst der Airbag wenigstens ein Band, welches zumindest auf seiner dem Polymer der ersten textilen Lage zugewandten Seite mit einem thermoplastischen Polymer beschichtet ist. Eine Breite des Bands ist geringer als eine Länge des Bands. Die erste textile Lage bildet mit dem wenigstens einen Band zumindest eine Überlappnaht aus, an welcher die erste textile Lage mit dem wenigstens einen Band durch Schweißen verbunden ist. Die Überlappnaht ist also als Überlappschweißnaht ausgebildet. Das Vorsehen einer solchen Überlappnaht führt zu einer hochfesten Verbindung zwischen der ersten textilen Lage und dem Band. Die Krafteinleitung ist nämlich im Falle einer Belastung des Airbags bei einer Überlappnaht deutlich vorteilhafter, als bei einer Schälnaht. Denn die Kraft wirkt nicht entlang einer Linie auf die Verbindung ein, sondern verteilt über eine Fläche. Es herrscht also eine Scherzugbelastung, welche im Betrieb des aufgeblasenen Airbags mit einer deutlich größeren Reißfestigkeit der Verbindung im Vergleich zur Reißfestigkeit bei der Schälbelastung einhergeht, welche bei einer Schälnaht auftritt. Die dadurch erreichbaren Berstfestigkeiten von Airbags liegen um das 2-3 fache höher als die von Standardairbags mit genähten und auf Schälung beanspruchten, also einer Schälbelastung ausgesetzten Verbindungen.

Beim Schweißen schmilzt das thermoplastische Polymer auf, welches auf das streifenförmige Band aufgebracht ist. Entsprechend sorgt dieses thermoplastische Kunststoffmaterial für das Verbinden der textilen Lage mit dem Band oder Streifen.

Des Weiteren ist das Verbinden der textilen Lage mit dem Band besonders prozesssicher und gut reproduzierbar. Zudem kann eine nachträgliche Abdichtung der Überlappnaht entfallen. Darüber hinaus bringt ein Schweißverfahren zum Ausbilden der zumindest einen Überlappnaht eine besonders große Freiheit in Bezug auf das Design des Airbags mit sich. Beim Ausbilden von Überlappschweißnähten sind nämlich besonders enge Kurvenradien möglich. Insbesondere die mit der Ausbildung der Überlappschweißnaht und mit dem Vorsehen des Bands einher gehende Designfreiheit ermöglicht es, den Airbag in besonders vielfältigen Gestaltungsvarianten zu realisieren.

Im Vergleich zu dem nur mit hohem Aufwand fehlerfrei durchführbaren Tape-Verfahren, bei welchem eine mit einem Nähgarn hergestellte Schälnaht mit einem Siegelband abgedichtet wird, ist bei geschweißten Nähten eine einfachere Reproduzierbarkeit und damit erhöhte Qualität erreichbar. Zudem sorgt die sehr sauber wirkende Optik von Überlappschweißnähten für ein besonders professionelles und Sicherheit vermittelndes Erscheinungsbild des Airbags gegenüber der Optik, wie sie bei Schälnähten auftritt. Aus der verbesserten Optik des Airbags resultiert auch ein Vertrauensgewinn in die Airbagtechnologie, welcher insbesondere durch die gesteigerte Reißfestigkeit der Überlappschweißnähte gerechtfertigt ist.

Des Weiteren erfolgen die Fertigung des Airbags und die zuverlässige Abdichtung an den durch die Überlappschweißnähte gebildeten Verbindungsstellen in einem Schritt. Dies führt zu einer besonders effizienten, raschen und kostengünstigen Fertigung des Airbags.

Darüber hinaus sind im Vergleich zu einem Tape-Verfahren oder dem Einsatz eines Silikonmaterials zum Abdichten und Verstärken von Schälnähten weniger Arbeitsschritte zum Fertigen des Airbags erforderlich, sodass die Fehleranfälligkeit beziehungsweise die Fehlerquote geringer ist.

Durch das Vorsehen der Überlappschweißnähte anstelle von Schälnähten lässt sich zudem, bei gleichem Volumen des aufgeblasenen Airbags, ein besonders kleines Packmaß des Airbags erreichen. Auch weist der Airbag ein besonders geringes Gewicht auf, da kein Siegelband beziehungsweise kein Silikonmaterial zur Abdichtung und Verstärkung von Schälnähten erforderlich ist. Durch das Vorsehen der Überlappschweißnähte lassen sich zudem besonders dünne Verbindungsstellen herstellen, was ebenfalls dem geringen Packmaß des zusammengefalteten Airbags zuträglich ist.

Es wird vorliegend bei der Verbindung der Komponenten des Airbags in Form von einer oder von mehreren textilen Lagen und des wenigstens einen Bands zumindest weitgehend und insbesondere vollständig auf die Ausbildung von Schälnähten verzichtet. Vielmehr kommen die geschweißten Überlappnähte zum Einsatz. Dadurch, dass der Airbag zumindest in Bereichen, in welchen wenigstens eine textile Lage mit dem wenigstens einen Band verbunden ist, frei von Schälnähten ist, sind auch die mit dem Vorhandensein von Schälnähten einhergehenden Nachteile besonders weitgehend und sicher vermieden.

Von Vorteil ist es, dass das thermoplastische Polymer des wenigstens einen Bands eine größere flächenbezogene Masse aufweist als das Polymer der ersten textilen Lage und/oder der zweiten textilen Lage. Denn dann kann besonders einfach eine für ein sicheres Verbinden durch Schweißen ausreichende Menge von thermoplastischem Polymer durch Vorsehen der Polymerbeschichtung lediglich auf dem Band bereitgestellt werden. Beispielsweise kann vorgesehen sein, dass die Polymerbeschichtung der textilen Lagen eine flächenbezogene Masse von etwa 25 Gramm pro Quadratmeter aufweist, während das Band eine Beschichtung mit dem thermoplastischen Polymer in einer Größenordnung von etwa 120 Gramm pro Quadratmeter aufweisen kann. Die flächenbezogene Masse des thermoplastischen Polymers kann also insbesondere ein Mehrfaches der flächenbezogenen Masse des auf die textilen Lagen aufgebrachten Polymers betragen.

Als weiter vorteilhaft hat es sich gezeigt, dass das thermoplastische Polymer des wenigstens einen Bands auf eine Beschichtung des Bands aufgebracht ist, welche durch ein Polymer gebildet ist. Diese weitere Beschichtung des Bands kann insbesondere ein Polyurethan umfassen oder aus Polyurethan gebildet sein. Entsprechend kann das Material für das Band im Aufbau dem der textilen Lagen entsprechen, wobei auf dem Band lediglich zusätzlich das thermoplastische Polymer vorhanden ist. Dadurch lassen sich besonders einheitliche Materialeigenschaften des Airbags erreichen, und die Fertigung des Airbags gestaltet sich besonders einfach.

Der Airbag umfasst eine zweite textile Lage, welche zumindest auf ihrer dem thermoplastischen Polymer des wenigstens einen Bands zugewandten Seite mit einem Polymer beschichtet ist und mit dem wenigstens einen Band zumindest eine weitere Überlappnaht ausbildet, an welcher die zweite textile Lage mit dem wenigstens einen Band durch Schweißen verbunden ist. Die beiden textilen Lagen sind also nicht miteinander verbunden, sondern jeweils nur mit dem Band verschweißt. Mit anderen Worten sind die beiden textilen Lagen lediglich mittelbar, nämlich durch Verschweißen der jeweiligen textilen Lage mit dem Band, und nicht direkt miteinander verbunden.

Dadurch können besonders einfach aufgebaute textile Lagen zum Einsatz kommen. Denn die textilen Lagen brauchen nicht flächig mit einer vergleichsweise dicken thermoplastischen Polymerbeschichtung versehen zu werden, um im Bereich der textilen Lagen eine Verbindung durch Schweißen zu ermöglichen. Eine dünne Polymerbeschichtung der textilen Lagen sorgt für eine sehr niedrige Gasdurchlässigkeit der textilen Lagen entsprechend den Anforderungen für Airbags, welche in einem Lawinenairbagsystem zum Einsatz kommen. Das Ausbilden der Überlappschweißnaht zwischen der jeweiligen textilen Lage und dem Band wird demgegenüber im Wesentlichen durch die thermoplastische Polymerbeschichtung des Bands sichergestellt. Dadurch lässt sich ein besonders geringes Gewicht der mit dem Polymer beschichteten textilen Lagen und somit des Airbags erreichen.

Jeweilige Ränder der beiden textilen Lagen können in Richtung der Breite des Bands aneinanderstoßen. Durch das Vorsehen von derartig auf Stoß verlegten textilen Lagen lässt sich auch mit einem vergleichsweisen schmalen Band und daher geringem Materialeinsatz eine besonders reißfeste Verbindung der jeweiligen textilen Lage mit dem Band erreichen.

In einer alternativen Ausgestaltung sind jeweilige Ränder der beiden textilen Lagen in Richtung der Breite des Bands zumindest bereichsweise voneinander beabstandet. Dies erlaubt es, Material für die textilen Lagen einzusparen. Des Weiteren kann insbesondere bei dieser Ausgestaltung ein vergleichsweise breites Band zum Einsatz kommen, welches eine besonders große Designfreiheit bei der Gestaltung des Airbags mit sich bringt. Es kann nämlich vorgesehen sein, dass in bestimmten Bereichen die beiden Ränder aneinander anstoßen und in anderen Bereichen einen Abstand voneinander aufweisen. So ist eine besonders große Flexibilität bei der Fertigung des Airbags erreichbar. Dies gilt insbesondere, wenn die Ränder der beiden textilen Lagen in Richtung der Breite des Bands zumindest bereichsweise um bis zu etwa 50 mm voneinander beabstandet sind. Es kann hierfür jedoch insbesondere auch ein Abstand von bis zu bis etwa 100 mm vorgesehen sein.

Als weiter vorteilhaft hat es sich gezeigt, wenn die erste textile Lage und/oder die zweite textile Lage eine dem Polymer der textilen Lage abgewandte Seite aufweist, welche unbeschichtet ist und eine Außenseite des Airbags bildet. Dadurch, dass bevorzugt die erste textile Lage und die zweite textile Lage lediglich einseitig mit dem Polymer beschichtet sind, weisen die textilen Lagen ein geringeres Gewicht auf als bei einer beidseitigen Beschichtung. Durch das Vorsehen der Polymerbeschichtung auf der Innenseite der textilen Lagen ist das Polymer zudem besonders gut geschützt, sodass besonders gut und dauerhaft die zumindest weitgehende Gasdichtigkeit des Airbags sichergestellt werden kann.

Die erste textile Lage und/oder die zweite textile Lage können aus einem Polyamid, insbesondere aus einem Polyamidgewebe oder einem Polyamidgewirke, gebildet sein. Derartige textile Lagen lassen sich mit einer entsprechend hohen Reißfestigkeit bereitstellen und verleihen zudem dem Airbag die gewünschte Flexibilität. Insbesondere kann das Polyamid 6.6 zum Einsatz kommen, welches auch unter dem Namen Nylon bekannt ist. Hierbei können die Fäden eine Fadenfeinheit von 210 Denier (= 210 Gramm pro 900 Meter) aufweisen. Im Gewebeaufbau können 61 Fäden/Inch vorgesehen sein, und das Gewicht der textilen Lagen kann bei etwa 122 Gramm pro Quadratmeter liegen. Die Zugfestigkeit der jeweiligen, mit dem Polymer beschichteten textilen Lage beträgt bevorzugt bei Bestimmung gemäß der DIN EN ISO 13934-1 mehr als 1.500 Newton in Kette und Schuss und die gemäß DIN EN ISO 13937-2 bestimmte Scherfestigkeit bevorzugt mehr als 35 Newton in Kette und Schuss.

Auch das Band kann aus einem solchen Polyamid, insbesondere aus einem Polyamidgewebe oder Polyamidgewirke, gebildet sein. Es kann also insbesondere für das Band ein Material zum Einsatz kommen, welches bezüglich der Festigkeitseigenschaften dem Material der textilen Lagen entspricht, jedoch zusätzlich zumindest die Beschichtung mit dem thermoplastischen Polymer aufweist. Hierbei ist diese Beschichtung mit dem thermoplastischen Polymer dicker als die Beschichtung der jeweiligen textilen Lage mit dem Polymer. So ist einerseits sichergestellt, dass das beschichtete Band die gleichen mechanischen Eigenschaften bezüglich der Festigkeit aufweist wie die textilen Lagen. Und andererseits lassen sich die Überlappschweißnähte gut ausbilden.

Das Polymer der textilen Lage kann ein Polyurethan umfassen oder aus Polyurethan gebildet sein. Es kann also die textile Lage mit einem Polyurethan beschichtet sein. Insbesondere dieses Material sorgt bei guter Verarbeitbarkeit für die gewünschte geringe Luftdurchlässigkeit der beschichteten textilen Lage.

Auch das thermoplastische Polymer des wenigstens einen Bands kann ein Polyurethan umfassen oder aus Polyurethan gebildet sein. Entsprechend kommt dann ein thermoplastisches Polyurethan zum Einsatz, um dem Band die Schweißfähigkeit zu verleihen. Ein solches Material eignet sich besonders gut für das Verschweißen mit der jeweiligen textilen Lage, insbesondere für das Hochfrequenzschweißen. Jedoch können auch andere thermoplastische Kunststoffe, welche prinzipiell schweißfähig sind, das thermoplastische Polymer bereitstellen. Wenn das thermoplastische Polyurethan des Bands sich beim Schweißen mit dem Polyurethan der jeweiligen textilen Lage verbindet, ist zudem eine besonders belastbare Verbindung erreichbar.

Von Vorteil ist es weiterhin, wenn wenigstens ein Halteelement zum Befestigen des Airbags an einer Trageinrichtung vorgesehen ist, welches durch Schweißen mit der ersten textilen Lage und/oder mit der zweiten textilen Lage und/oder mit dem wenigstens einen Band verbunden ist. So kann nämlich besonders einfach eine sehr reißfeste Verbindung derartiger Halteelemente mit den übrigen Komponenten des Airbags sichergestellt werden. Es braucht also nicht mehr der Airbag im Bereich von Befestigungspunkten, welcher der Anbindung an die Trageinrichtung dienen, mit zusätzlichen Gewebebahnen verstärkt zu werden. Vielmehr können durch den Einsatz der Schweißtechnik die entsprechenden Halteelemente oder Befestigungselemente direkt bei der Fertigung auf die textilen Lagen oder das Band des Airbags aufgeschweißt oder zwischen die textilen Lagen des Airbags beziehungsweise zwischen eine textile Lage und das Band eingeschweißt werden.

Entsprechende Halteelemente können insbesondere als Schlaufen und/oder Laschen ausgebildet sein. Mittels derartiger Schlaufen oder Laschen kann dann der Airbag einfach und sicher an der Trageinrichtung, insbesondere an einem Rucksack, befestigt werden, beispielsweise durch Einknöpfen.

Durch das Vorsehen von durch das Schweißen gebildeten Überlappnähten, an welchen das wenigstens eine Halteelement mit wenigstens einer der textilen Lagen und/oder dem Band verbunden ist, lässt sich auch hier das Auftreten von Spannungsspitzen vermeiden. Im Falle einer Belastung des Halteelements erfolgt also die Krafteinleitung gleichmäßig über die gesamte Fläche der Überlappschweißnaht.

Eine hochfeste Verbindung der ersten textilen Lage und/oder der zweiten textilen Lage mit dem Band lässt sich durch Ausbilden der Überlappschweißnaht mittels Hochfrequenzschweißen und/oder Laserschweißen besonders einfach und sicher erreichen.

Die Breite des Bands liegt bevorzugt im Bereich von etwa 20 mm bis etwa 200 mm. Durch ein Band einer solchen Breite lässt sich eine Überlappung zwischen dem Band und der jeweiligen textilen Lage von jeweils zumindest 10 mm erreichen, sodass ausreichend Platz für zwei nebeneinander liegende Überlappschweißnähte durch das Band bereitgestellt ist. Durch eine größere Breite des Bands, welche beispielsweise bei etwa 50 mm bis 60 mm liegen kann, lassen sich einerseits Fertigungstoleranzen beim Herstellen des Bands und auch bei der Ausführung der Überlappschweißnähte bereitstellen. Zudem bringt ein solches etwas breiteres Band eine besonders große Designfreiheit mit sich. Denn es ist so besonders einfach möglich, an bestimmten Stellen des Airbags einen besonders geringen Abstand der der Ränder beiden textilen Lagen voneinander in Richtung der Breite des Bands vorzusehen und an anderen Stellen einen größeren Abstand der Ränder voneinander.

Die Überlappnaht kann eine Breite von etwa 4 mm bis etwa 10 mm und insbesondere von etwa 6 mm bis etwa 8 mm aufweisen. Durch das Vorsehen einer Überlappschweißnaht mit einer solchen Breite lässt sich besonders einfach eine sichere Verbindung zwischen dem Band und der jeweiligen textilen Lage sicherstellen.

Das erfindungsgemäße Lawinenairbagsystem umfasst wenigstens einen erfindungsgemäßen Airbag. Die für den erfindungsgemäßen Airbag beschriebenen Vorteile und bevorzugten Ausführungsformen gelten auch für das erfindungsgemäße Lawinenairbagsystem und für das erfindungsgemäße Verfahren zum Fertigen eines Airbags.

Bei dem erfindungsgemäßen Verfahren zum Fertigen eines Airbags für ein Lawinenairbagsystem wird eine erste textile Lage bereitgestellt, welche auf zumindest einer Seite mit einem Polymer beschichtet ist. Zum Fertigen des Airbags wird wenigstens ein Band verwendet, welches zumindest auf seiner dem Polymer der ersten textilen Lage zugewandten Seite mit einem thermoplastischen Polymer beschichtet ist, und dessen Breite geringer ist als eine Länge des Bands. Hierbei wird die erste textile Lage an zumindest einer Überlappnaht mit dem wenigstens einen Band durch Schweißen verbunden. Es wird also zwischen der ersten textilen Lage und dem wenigstens einen Band eine Überlappschweißnaht ausgebildet. So ist ein besonders reißfester Verbund der textilen Lage mit dem Band sichergestellt. Es wird wenigstens eine zweite textile Lage bereitgestellt, welche zumindest auf ihrer dem thermoplastischen Polymer des wenigstens einen Bands zugewandten Seite mit einem Polymer beschichtet ist, wobei mit dem wenigstens einen Band zumindest eine weitere Überlappnaht ausbildet wird, an welcher die zweite textile Lage mit dem wenigstens einen Band durch Schweißen verbunden wird. Als das thermoplastische Polymer des wenigstens einen Bands wird eine schweißfähige Beschichtung verwendet, welche eine größere flächenbezogene Masse aufweist als die durch das Polymer der ersten textilen Lage und der zweiten textilen Lage gebildete Beschichtung. Das thermoplastische Polymer des wenigstens einen Bands ist auf eine Beschichtung des Bands aufgebracht, welche durch ein Polymer gebildet ist.

Die vorstehend in der Beschreibung genannten Merkmale und Merkmalskombinationen sowie die nachfolgend in der Figurenbeschreibung genannten und/oder in den Figuren alleine gezeigten Merkmale und Merkmalskombinationen sind nicht nur in der jeweils angegebenen Kombination, sondern auch in anderen Kombinationen oder in Alleinstellung verwendbar, ohne den Rahmen der Erfindung zu verlassen. Es sind somit auch Ausführungen als von der Erfindung umfasst und offenbart anzusehen, die in den Figuren nicht explizit gezeigt oder erläutert sind, jedoch durch separierte Merkmalskombinationen aus den erläuterten Ausführungen hervorgehen und erzeugbar sind.

Weitere Vorteile, Merkmale und Einzelheiten der Erfindung ergeben sich aus den Ansprüchen, der nachfolgenden Beschreibung bevorzugter Ausführungsformen sowie anhand der Zeichnungen. Dabei zeigen:
- Fig. 1: stark schematisiert einen Airbag gemäß dem Stand der Technik für ein Lawinenairbagsystem, wobei der Airbag genähte Schälnähte aufweist;
- Fig. 2: eine vergrößerte Detailansicht einer solchen Schälnaht, anhand welcher zwei dem Stand der Technik gemäße Arten der Abdichtung der Schälnaht veranschaulicht sind;
- Fig. 3: stark schematisiert das Ausbilden von Überlappschweißnähten zwischen zwei textilen Lagen eines Lawinenairbags und einem Band, welches mit einem thermoplastischen Polymer beschichtet ist;
- Fig. 4: stark schematisiert den Airbag, welcher die Überlappschweißnähte gemäß Fig. 3 aufweist; und
- Fig. 5: perspektivisch ein Lawinenairbagsystem, bei welchem eine Befülleinrichtung zum Befüllen des Airbags lediglich schematisch gezeigt ist.

Zur Beschreibung von Fig. 1 und Fig. 2 wird auf die Erläuterungen zum Stand der Technik im vorderen Teil der vorstehenden Beschreibung verwiesen.

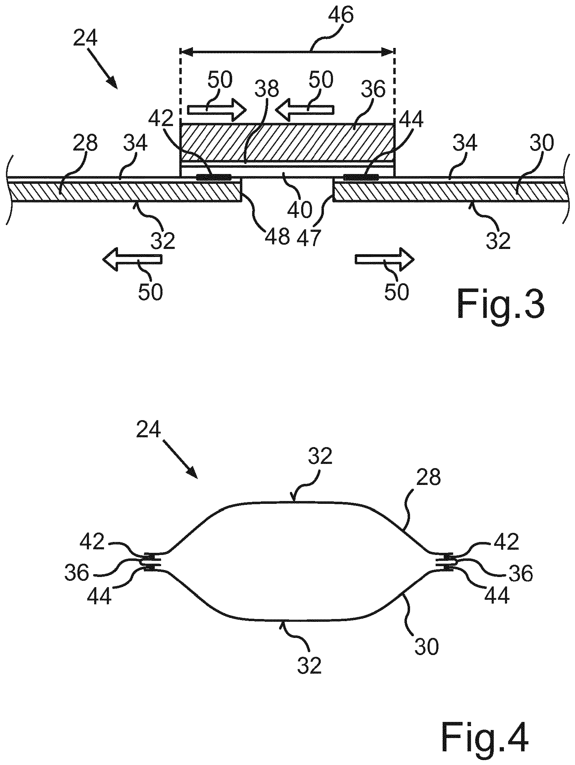

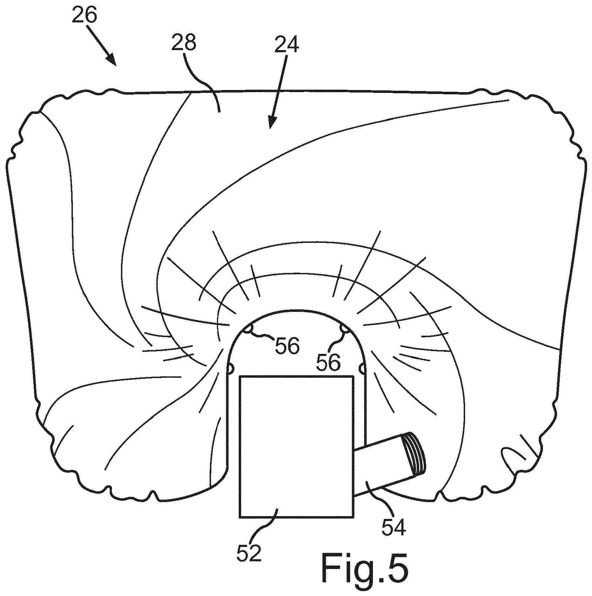

Von einem Airbag 24 eines Lawinenairbagsystems 26 (vergleiche Fig. 5) sind in Fig. 3 stark schematisiert verschiedene Komponenten gezeigt. So umfasst der Airbag 24 eine erste textile Lage 28 und eine zweite textile Lage 30 (vergleiche Fig. 4). Jede dieser textilen Lagen 28, 30, welche vorliegend aus einem Polyamidgewebe gebildet sind, weisen eine erste Seite auf, durch welche eine Außenseite 32 des Airbags 24 gebildet ist. An einer dieser Außenseite 32 gegenüberliegenden Seite sind sowohl die erste textile Lage 28 als auch die zweite textile Lage 30 mit einem Polymer 34 beschichtet, beispielsweise mit einem Polyurethan.

Als weitere Komponente umfasst der Airbag 24 wenigstens ein Band 36, welches vorliegend auf seiner den textilen Lagen 28, 30 zugewandten Seite ebenfalls mit einem Polymer 38, beispielsweise einem Polyurethan, beschichtet ist. Entsprechend kann das mit dem Polymer 38 beschichtete Band 36 insoweit den gleichen Aufbau aufweisen wie die mit dem Polymer 34 beschichteten textilen Lagen 28, 30. Durch diese gleichartige Ausbildung sind dem mit dem Polymer 38 beschichteten Band 36 die gleichen mechanischen Eigenschaften bezüglich der Festigkeit verliehen, wie sie auch die mit dem Polymer 34 beschichteten textilen Lagen 28, 30 haben.

Jedoch ist vorliegend bei dem Band 36 auf eine den textilen Lagen 28, 30 zugewandte Seite des Polymers 38 zusätzlich eine schweißfähige Beschichtung in Form eines thermoplastischen Polymers 40 aufgebracht.

Während bei der Beschichtung mit den Polymeren 34, 38 ein Polyurethan mit einer flächenbezogenen Masse von beispielsweise etwa 25 Gramm pro Quadratmeter zum Einsatz kommen kann, weist das thermoplastische Polymer 40 bevorzugt eine größere flächenbezogene Masse auf, beispielsweise eine flächenbezogene Masse von etwa 120 Gramm pro Quadratmeter. Durch das thermoplastische Polymer 40 ist eine schweißfähige Beschichtung des Bands 36 bereitgestellt. Vorliegend ist jede der beiden textilen Lagen 28, 30 mit dem Band 36 durch Schweißen verbunden. Hierfür ist zwischen der ersten textilen Lage 28 und dem Band 36 eine erste Überlappnaht 42 ausgebildet. In analoger Weise ist die zweite textile Lage 30 mit dem Band 36 an einer weiteren Überlappnaht 44 durch Schweißen verbunden.

Durch das mit dem thermoplastischen Polymer 40 beschichtete Band 32 ist somit ein bandförmiges oder streifenförmiges Schweißbahnmaterial bereitgestellt, welches mit der jeweiligen textilen Lage 28, 30, also mit den jeweiligen Stoffbahnen des Airbaggewebes durch Schweißen verbunden ist.

Als Schweißverfahren kann insbesondere das Hochfrequenzschweißen zum Einsatz kommen, wobei die Überlappnähte 42, 44 auch durch Laserschweißen hergestellt sein können. Beim Hochfrequenzschweißen beträgt die zum Ausbilden der Überlappnähte 42, 44 vorzusehende Schweißzeit bevorzugt etwa 10 Sekunden bis 15 Sekunden, und es kann beim Schweißen ein Druck von 1,2 Bar auf die Stellen ausgeübt werden, an welchen die textilen Lagen 28, 30 mit dem Band 36 überlappen.

Die beiden Überlappnähte 42, 44 liegen vorliegend nebeneinander. In der in Fig. 3 gezeigten Variante des Airbags 24 ist eine Breite 46 des Bands 36 größer als die Summe der Breiten der überlappenden Bereiche zwischen der jeweiligen textilen Lage 28, 30 und dem Band 36. Folglich sind bei dieser Variante des Airbags 24 jeweilige Ränder 47, 48 der beiden textilen Lagen 28, 30 voneinander beabstandet. Der Abstand zwischen den beiden Rändern 47, 48 kann beispielsweise bis zu etwa 50 mm betragen. Es kann jedoch auch vorgesehen sein, dass die beiden Ränder 47, 48 aneinander anstoßen, die beiden textilen Lagen 28, 30 also auf Stoß liegen und hierbei die beiden textilen Lagen 28, 30 jeweils mit dem Band 36 verschweißt sind.

Die jeweiligen textilen Lagen 28, 30 können auch über mehr als eine jeweilige Überlappnaht 42, 44 mit dem Band 36 verbunden sein. Beispielsweise können zwei oder auch mehr Überlappnähte nebeneinander ausgeführt werden, um die erste textile Lage 28 mit dem Band 36 zu verbinden und/oder um die zweite textile Lage 30 mit dem Band 36 zu verbinden.

Wenn auf den aufgeblasenen Airbag 24 der sich beim und nach dem Befüllen einstellende Innendruck wirkt oder wenn der aufgeblasene Airbag 24 von außen etwa durch Schneemassen, Steine oder dergleichen Gegenstände belastet wird, so wirken auf die jeweiligen Überlappnähte 42, 44 Scherzugbelastungen. Hierbei verteilt sich die einwirkende Kraft über die gesamte Breite der jeweiligen Überlappnaht 42, 44. In Fig. 3 sind vereinfacht durch Kraftpfeile 50 die Kräfte angegeben, welche auf die Überlappnaht 44 zwischen der zweiten textilen Lage 30 und dem Band 36 wirken. Entsprechende Kräfte wirken selbstverständlich auch auf die andere Überlappnaht 42, was durch weitere Kraftpfeile 50 veranschaulicht ist. Jedoch werden durch das Vorsehen der Überlappnähte 42, 44 oder Überlappschweißnähte sich entlang einer Linie konzentrierende Kraftspitzen vermieden, wie sie an den in Fig. 1 und Fig. 2 gezeigten Schälnähten auftreten.

Das Vorsehen des mit der schweißfähigen Beschichtung in Form des thermoplastischen Polymers 40 versehenen Bands 36 bringt eine besonders große Designfreiheit bei der räumlichen Gestaltung des Airbags 24 mit sich. So kann in einem besonders einfachen Fall die erste textile Lage 28 eine Vorderseite des Airbags 24 bilden und die zweite textile Lage 30 eine Rückseite, welche an ihrem jeweiligen Rand jeweils mit dem Band 36 verbunden sind. Es kann jedoch auch beispielsweise durch eine der beiden textilen Lagen 28, 30 ein Bodenbereich und durch die andere der beiden textilen Lagen 28, 30 ein Deckelbereich des Airbags 24 gebildet sein, wobei durch wenigstens eine zusätzliche (vorliegend nicht gezeigte) textile Lage eine Seitenwand des Airbags 24 gebildet sein kann. Hierbei können zwischen dem Bodenbereich und der Seitenwand einerseits und zwischen der Seitenwand und dem Deckelbereich andererseits jeweilige Bänder 36 vorgesehen sein. Jedoch sind auch andere, komplexere Formgebungen des Airbags 24 realisierbar, wobei bevorzugt zum Verbinden zweier textiler Lagen 28, 30 an den entsprechenden Stellen ein Band wie das in Fig. 3 gezeigte Band 36 vorgesehen ist.

Fig. 4 zeigt stark schematisiert den Airbag 24 in einer besonders einfachen Ausgestaltung, in welcher die erste textile Lage 28 die Vorderseite des Airbags 24 bildet (vergleiche Fig. 5) und die zweite textile Lage 30 die Rückseite, und bei welcher die beiden textilen Lage 28, 30 an ihrem jeweiligen Rand jeweils mit dem Band 36 verbunden sind. Hierbei sind die Überlappnähte 42, 44 schematisch gezeigt. Jedoch sind die jeweiligen Beschichtungen der textilen Lagen 28, 30 und des Bands 36 sowie die gegenüber dem Band 36 geringere Dicke der textilen Lagen 28, 30 aus Gründen der besseren Übersichtlichkeit in Fig. 4 nicht dargestellt.

In Fig. 5 ist beispielhaft der Airbag 24 des Lawinenairbagsystems 26 im aufgeblasenen Zustand gezeigt. Hierbei ist eine Befülleinrichtung 52 lediglich schematisch gezeigt, welche das Befüllen des Airbags 24 beispielsweise mit Gas aus einer Gaspatrone und mit angesaugter Umgebungsluft bewirken kann. Für das Ansaugen der Umgebungsluft wird vorliegend (in für Lawinenairbagsysteme an sich bekannter Weise) der Venturieffekt genutzt, welcher die hohe Strömungsgeschwindigkeit des durch einen Venturikanal 54 des Lawinenairbagsystems 26 strömenden Gases aus der Gaspatrone ausnutzt. Vorliegend ist beispielhaft der in den Airbag 24 mündende Venturikanal 54 oder Auslasskanal gezeigt, durch welchen das aus der Gaspatrone stammende Gas und die angesaugte Umgebungsluft strömen, um den Airbag 24 zu befüllen.

Aus Fig. 5 ist des Weiteren ersichtlich, dass der Airbag 24 Halteelemente insbesondere in Form von Schlaufen 56 oder dergleichen aufweisen kann, welche dem Befestigen des Airbags 24 an einer Trageinrichtung wie beispielsweise einem Rucksack dienen. Vorliegend sind diese Schlaufen 56 ebenfalls durch die Ausbildung von Überlappnähten oder Überlappschweißnähten beispielsweise mit dem Band 36 durch Verschweißen verbunden.

## Patentansprüche

1. Airbag für ein Lawinenairbagsystem (26), mit einer ersten textilen Lage (28), welche auf zumindest einer Seite mit einem Polymer (34) beschichtet ist,
**dadurch gekennzeichnet, dass**
der Airbag (24) wenigstens ein Band (36) umfasst, welches zumindest auf seiner dem Polymer (34) der ersten textilen Lage (28) zugewandten Seite mit einem thermoplastischen Polymer (40) beschichtet ist, und dessen Breite (46) geringer ist als eine Länge des Bands (36), wobei die erste textile Lage (28) mit dem wenigstens einen Band (36) zumindest eine Überlappnaht (42) ausbildet, an welcher die erste textile Lage (28) mit dem wenigstens einen Band (36) durch Schweißen verbunden ist, wobei der Airbag (24) wenigstens eine zweite textile Lage (30) umfasst, welche zumindest auf ihrer dem thermoplastischen Polymer (40) des wenigstens einen Bands (36) zugewandten Seite mit einem Polymer (34) beschichtet ist und mit dem wenigstens einen Band (36) zumindest eine weitere Überlappnaht (44) ausbildet, an welcher die zweite textile Lage (30) mit dem wenigstens einen Band (36) durch Schweißen verbunden ist, wobei die schweißfähige Beschichtung in Form des thermoplastischen Polymers (40) des wenigstens einen Bands (36) eine größere flächenbezogene Masse aufweist als die durch das Polymer (34) der ersten textilen Lage (28) und der zweiten textilen Lage (30) gebildete Beschichtung, und wobei das thermoplastische Polymer (40) des wenigstens einen Bands (36) auf eine Beschichtung des Bands (36) aufgebracht ist, welche durch ein Polymer (38) gebildet ist.

2. Airbag nach Anspruch 1,
**dadurch gekennzeichnet, dass**
jeweilige Ränder (47, 48) der beiden textilen Lagen (28, 30) in Richtung der Breite des Bands (36), insbesondere um bis zu etwa 50 mm bis etwa 100 mm, zumindest bereichsweise voneinander beabstandet sind.

3. Airbag nach einem der Ansprüche 1 bis 2,
**dadurch gekennzeichnet, dass**
die erste textile Lage (28) und/oder die zweite textile Lage (30) eine dem Polymer (34) der textilen Lage (28, 30) abgewandte Seite aufweist, welche unbeschichtet ist und eine Außenseite (32) des Airbags (24) bildet.

4. Airbag nach einem der Ansprüche 1 bis 3,
**dadurch gekennzeichnet, dass**
das thermoplastische Polymer (40) des wenigstens einen Bands (36) eine um ein Mehrfaches größere flächenbezogene Masse aufweist als das Polymer (34) der ersten textilen Lage (28) und der zweiten textilen Lage (30).

5. Airbag nach einem der Ansprüche 1 bis 4,
**dadurch gekennzeichnet, dass**
die erste textile Lage (28) und/oder die zweite textile Lage (30) und/oder das wenigstens eine Band (36) aus einem Polyamid, insbesondere aus einem Polyamidgewebe oder Polyamidgewirke, gebildet ist.

6. Airbag nach einem der Ansprüche 1 bis 5,
**dadurch gekennzeichnet, dass**
das Polymer (34) der textilen Lage (28, 30) und/oder das thermoplastische Polymer (40) des wenigstens einen Bands (36) ein Polyurethan umfasst oder aus Polyurethan gebildet ist.

7. Airbag nach einem der Ansprüche 1 bis 6,
**dadurch gekennzeichnet, dass**
die Beschichtung des Bands (36) ein Polyurethan umfasst oder aus Polyurethan gebildet ist.

8. Airbag nach einem der Ansprüche 1 bis 7,
**dadurch gekennzeichnet, dass**
wenigstens ein, insbesondere als Schlaufe (56) und/oder Lasche ausgebildetes, Halteelement zum Befestigen des Airbags (24) an einer Trageinrichtung, insbesondere an einem Rucksack, durch Schweißen mit der ersten textilen Lage (28) und/oder mit der zweiten textilen Lage (30) und/oder mit dem wenigstens einen Band (36) verbunden ist.

9. Airbag nach einem der Ansprüche 1 bis 8,
**dadurch gekennzeichnet, dass**
die erste textile Lage (28) und die zweite textile Lage (30) durch Hochfrequenzschweißen und/oder durch Laserschweißen mit dem wenigstens einen Band (36) verbunden sind.

10. Airbag nach einem der Ansprüche 1 bis 9,
**dadurch gekennzeichnet, dass**
die Breite des Bands (36) im Bereich von etwa 20 mm bis etwa 200 mm liegt.

11. Airbag nach einem der Ansprüche 1 bis 10,
**dadurch gekennzeichnet, dass**
die Überlappnaht (42, 44) eine Breite von etwa 4 mm bis etwa 10 mm, insbesondere von etwa 6 mm bis etwa 8 mm aufweist.

12. Lawinenairbagsystem mit wenigstens einem Airbag (24) nach einem der Ansprüche 1 bis 11.

13. Verfahren zum Fertigen eines Airbags (24) für ein Lawinenairbagsystem (26), bei welchem eine erste textile Lage (28) bereitgestellt wird, welche auf zumindest einer Seite mit einem Polymer (34) beschichtet ist,
**dadurch gekennzeichnet, dass**
zum Fertigen des Airbags (24) wenigstens ein Band (36) verwendet wird, welches zumindest auf seiner dem Polymer (34) der ersten textilen Lage (28) zugewandten Seite mit einem thermoplastischen Polymer (40) beschichtet ist, und dessen Breite (46) geringer ist als eine Länge des Bands (36), wobei die erste textile Lage (28) an zumindest einer Überlappnaht (42) mit dem wenigstens einen Band (36) durch Schweißen verbunden wird, wobei wenigstens eine zweite textile Lage (30) bereitgestellt wird, welche zumindest auf ihrer dem thermoplastischen Polymer (40) des wenigstens einen Bands (36) zugewandten Seite mit einem Polymer (34) beschichtet ist, wobei mit dem wenigstens einen Band (36) zumindest eine weitere Überlappnaht (44) ausbildet wird, an welcher die zweite textile Lage (30) mit dem wenigstens einen Band (36) durch Schweißen verbunden wird, wobei als das thermoplastische Polymer (40) des wenigstens einen Bands (36) eine schweißfähige Beschichtung verwendet wird, welche eine größere flächenbezogene Masse aufweist als die durch das Polymer (34) der ersten textilen Lage (28) und der zweiten textilen Lage (30) gebildete Beschichtung, und wobei das thermoplastische Polymer (40) des wenigstens einen Bands (36) auf eine Beschichtung des Bands (36) aufgebracht ist, welche durch ein Polymer (38) gebildet ist.

## Claims

1. An airbag for an avalanche airbag system (26) with a first textile layer (28), which is coated with a polymer (34) on at least one side,
**characterized in that**
the airbag (24) includes at least one strap (36), which is coated with a thermoplastic polymer (40) at least on its side facing the polymer (34) of the first textile layer (28), and the width (46) of which is less than a length of the strap (36), wherein the first textile layer (28) forms at least one overlap seam (42) with the at least one strap (36), at which the first textile layer (28) is connected to the at least one strap (36) by welding, wherein the airbag (24) includes at least one second textile layer (30), which is coated with a polymer (34) at least on its side facing the thermoplastic polymer (40) of the at least one strap (36) and forms at least one further overlap seam (44) with the at least one strap (36), at which the second textile layer (30) is connected to the at least one strap (36) by welding, wherein the weldable coating in the form of the thermoplastic polymer (40) of the at least one strap (36) has a greater surface-related mass than the coating formed by the polymer (34) of the first textile layer (28) and the second textile layer (30), and wherein the thermoplastic polymer (40) of the at least one strap (36) is applied to a coating of the strap (36), which is formed by a polymer (38).

2. The airbag according to claim 1,
**characterized in that**
respective edges (47, 48) of the two textile layers (28, 30) are spaced from each other at least in certain areas in the direction of the width of the strap (36), in particular by up to about 50 mm to about 100 mm.

3. The airbag according to any one of claims 1 to 2,
**characterized in that**
the first textile layer (28) and/or the second textile layer (30) comprise a side facing away from the polymer (34) of the textile layer (28, 30), which is uncoated and forms an outer side (32) of the airbag (24).

4. The airbag according to any one of claims 1 to 3,
**characterized in that**
the thermoplastic polymer (40) of the at least one strap (36) has a surface-related mass multiple times greater than the polymer (34) of the first textile layer (28) and the second textile layer (30).

5. The airbag according to any one of claims 1 to 4,
**characterized in that**
the first textile layer (28) and/or the second textile layer (30) and/or the at least one strap (36) are formed of a polyamide, in particular of a polyamide tissue or polyamide knitted fabric.

6. The airbag according to any one of claims 1 to 5,
**characterized in that**
the polymer (34) of the textile layer (28, 30) and/or the thermoplastic polymer (40) of the at least one strap (36) include a polyurethane or are formed of polyurethane.

7. The airbag according to any one of claims 1 to 6,
**characterized in that**
the coating of the strap (36) includes a polyurethane or is formed of polyurethane.

8. The airbag according to any one of claims 1 to 7,
**characterized in that**
at least one retaining element, in particular formed as a loop (56) and/or flap, for attaching the airbag (24) to a carrying device, in particular to a backpack, by welding is connected to the first textile layer (28) and/or to the second textile layer (30) and/or to the at least one strap (36).

9. The airbag according to any one of claims 1 to 8,
**characterized in that**
the first textile layer (28) and the second textile layer (30) are connected to the at least one strap (36) by high-frequency welding and/or by laser welding.

10. The airbag according to any one of claims 1 to 9,
**characterized in that**
the width of the strap (36) is in the range from about 20 mm to about 200 mm.

11. The airbag according to any one of claims 1 to 10,
**characterized in that**
the overlap seam (42, 44) has a width from about 4 mm to about 10 mm, in particular from about 6 mm to about 8 mm.

12. An avalanche airbag system with at least one airbag (24) according to any one of claims 1 to 11.

13. A method for manufacturing an airbag (24) for an avalanche airbag system (26), in which a first textile layer (28) is provided, which is coated with a polymer (34) on at least one side,
**characterized in that**
for manufacturing the airbag (24), at least one strap (36) is used, which is coated with a thermoplastic polymer (40) at least one its side facing the polymer (34) of the first textile layer (28), and the width (46) of which is less than a length of the strap (36), wherein the first textile layer (28) is connected to the at least one strap (36) by welding on at least one overlap seam (42), wherein at least one second textile layer (30) is provided, which is coated with a polymer (34) at least on its side facing the thermoplastic polymer (40) of the at least one strap (36), wherein at least one further overlap seam (44) is formed with the at least one strap (36), at which the second textile layer (30) is connected to the at least one strap (36) by welding, wherein a weldable coating is used as the thermoplastic polymer (40) of the at least one strap (36), which has a greater surface-related mass than the coating formed by the polymer (34) of the first textile layer (28) and the second textile layer (30), and wherein the thermoplastic polymer (40) of the at least one strap (36) is applied to a coating of the strap (36), which is formed by a polymer (38).

## Revendications

1. Coussin gonflable pour un système de coussin gonflable en cas d'avalanche (26) avec une première couche de textile (28), qui est revêtue d'un polymère (34) sur au moins un côté,
**caractérisé en ce que**
le coussin gonflable (24) comporte au moins un ruban (36), qui est revêtu d'un polymère thermoplastique (40) au moins sur son côté faisant face au polymère (34) de la première couche de textile (28), et dont la largeur (46) est inférieure à une longueur du ruban (36), dans laquelle la première couche de textile (28) forme au moins une soudure à recouvrement (42) avec l'au moins un ruban (36), à laquelle la première couche de textile (28) est raccordée avec l'au moins un ruban (36) par soudage, dans lequel le coussin gonflable (24) comporte au moins une seconde couche textile (30), qui est revêtue d'un polymère (34) au moins sur son côté faisant face au polymère thermoplastique (40) de l'au moins un ruban (36), et forme au moins une autre soudure à recouvrement (44) avec l'au moins un ruban (36), à laquelle la seconde couche textile (30) est raccordée avec l'au moins un ruban (36) par soudage, dans lequel le revêtement soudable sous forme du polymère thermoplastique (40) de l'au moins un ruban (36) comporte une masse surfacique supérieure au revêtement formé par le polymère (34) de la première couche de textile (28) et de la seconde couche textile (30), et dans lequel le polymère thermoplastique (40) de l'au moins un ruban (36) est appliqué sur un revêtement du ruban (36), qui est formé par un polymère (38).

2. Coussin gonflable selon la revendication 1,
**caractérisé en ce que**
des bords respectifs (47, 48) des deux couches textiles (28, 30) sont espacés les uns des autres dans la direction de la largeur du ruban (36), surtout de jusqu'à 50 mm environ à 100 mm environ, au moins par endroits.

3. Coussin gonflable selon l'une quelconque des revendications 1 à 2,
**caractérisé en ce que**
la première couche de textile (28) et / ou la seconde couche textile (30) comporte un côté opposé au polymère (34) de la couche textile (28, 30), qui est non revêtu et forme un côté extérieur du coussin gonflable (24).

4. Coussin gonflable selon l'une quelconque des revendications 1 à 3
**caractérisé en ce que**
le polymère thermoplastique (40) de l'au moins un ruban (36) comporte une masse surfacique plusieurs fois supérieure au polymère (34) de la première couche de textile (28) et de la seconde couche textile (30).

5. Coussin gonflable selon l'une quelconque des revendications 1 à 4,
**caractérisé en ce que**
la première couche de textile (28) et / ou la seconde couche textile (30) et / ou l'au moins un ruban (36) est formée à partir d'un polyamide, surtout à partir d'un tissu en polyamide ou d'un tissu à mailles en polyamide.

6. Coussin gonflable selon l'une quelconque des revendications 1 à 5,
**caractérisé en ce que**
le polymère (34) de la couche textile (28, 30) et / ou le polymère thermoplastique (40) de l'au moins un ruban (36) comporte un polyuréthane ou est formé à partir d'un polyuréthane.

7. Coussin gonflable selon l'une quelconque des revendications 1 à 6,
**caractérisé en ce que**
le revêtement du ruban (36) comporte un polyuréthane ou est formé à partir d'un polyuréthane.

8. Coussin gonflable selon l'une quelconque des revendications 1 à 7,
**caractérisé en ce que**
au moins un élément de retenue, surtout formé en tant que dragonne (56) et / ou de languette, pour fixer le coussin gonflable (24) sur un moyen de support, surtout un sac à dos, est raccordé avec la première couche de textile (28) et / ou avec la seconde couche textile (30) et / ou avec l'au moins un ruban (36) par soudage.

9. Coussin gonflable selon l'une quelconque des revendications 1 à 8,
**caractérisé en ce que**
la première couche de textile (28) et la seconde couche textile (30) est raccordée avec l'au moins un ruban (36) par soudage à haute fréquence et / ou par soudage à laser.

10. Coussin gonflable selon l'une quelconque des revendications 1 à 9,
**caractérisé en ce que**
la largeur du ruban (36) est comprise entre environ 20 mm à environ 200 mm.

11. Coussin gonflable selon l'une quelconque des revendications 1 à 10,
**caractérisé en ce que**
la soudure à recouvrement (42, 44) comporte une largeur d'environ 4 mm à environ 10 mm, surtout d'environ 6 mm à environ 8 mm.

12. Système de coussin gonflable en cas d'avalanche avec au moins un coussin gonflable (24) selon l'une quelconque des revendications 1 à 11.

13. Procédé de fabrication d'un coussin gonflable (24) pour un système de coussin gonflable en cas d'avalanche (26), dans lequel une première couche de textile (28) est fournie, qui est revêtue d'un polymère (34) sur au moins un côté,
**caractérisé en ce que**
pour la fabrication du coussin gonflable (24) au moins un ruban (36) est utilisé, qui est revêtu d'un polymère thermoplastique (40) au moins sur son côté faisant face au polymère (34) de la première couche de textile (28), et dont la largeur (46) est inférieure à une longueur du ruban (36), dans laquelle la première couche de textile (28) est raccordée avec au moins un ruban (36) par soudage sur au moins une soudure à recouvrement (42), dans lequel au moins une seconde couche textile (30) est fournie, qui est revêtue d'un polymère (34) au moins sur son côté faisant face au polymère thermoplastique (40) de l'au moins un ruban (36), dans lequel au moins une autre soudure à recouvrement (44) est formé avec l'au moins un ruban (36), à laquelle la seconde couche textile (30) est raccordée avec l'au moins un ruban (36) par soudage, dans lequel un revêtement soudable est utilisé comme polymère thermoplastique (40) de l'au moins un ruban (36), qui comporte une masse surfacique supérieure au revêtement formé par le polymère (34) de la première couche de textile (28) et de la seconde couche textile (30), et dans lequel le polymère thermoplastique (40) de l'au moins un ruban (36) est appliqué sur un revêtement du ruban (36) qui est formé par un polymère (38).
